# EUROPÄISCHE PATENTSCHRIFT

(11) **EP 0 849 121 B1**
(45) Veröffentlichungstag und Bekanntmachung des Hinweises auf die Patenterteilung: **28.01.2004**
(21) Anmeldenummer: 97119964.1
(22) Anmeldetag: 14.11.1997
(51) Int. Cl.: B60R 16/02

(54) **Verfahren zum drahtlosen Übertragen von Energie und Daten**
Procedure for wireless power and data transmission
Procédé de transmission sans fils d'énergie et de données

(30) Priorität: 20.12.1996 DE 19653522
(43) Veröffentlichungstag der Anmeldung: 24.06.1998
(73) Patentinhaber: Bayerische Motoren Werke Aktiengesellschaft, 80788 München (DE)
(72) Erfinder: Griessbach, Robert, 83629 Weyarn (DE)

(56) Entgegenhaltungen:
- EP-A- 0 482 234
- EP-A- 0 616 924
- WO-A-94/01846
- DE-A- 19 512 855
- DE-A- 19 614 161

## Beschreibung

Die Erfindung bezieht sich auf ein Verfahren zum drahtlosen Übertragen von Energie und Daten zwischen zwei Teilen.

Zur Übertragung von Energie und Daten, z. B. von der Lenksäule zum Lenkrad eines Fahrzeugs, werden heute überwiegend flexible Leitungen eingesetzt. Beim Lenkrad wird hierzu eine sogenannte Wickelfeder verwendet. Die Wickelfeder hat den Nachteil, daß sie Geräusche verursacht, mechanisch empfindlich ist und aufgrund ihres Aufbaus ungünstige EMV-Eingenschaften besitzt.

Berührungslose Verfahren auf optischer und induktiver Basis sind ebenfalls bekannt. Die optischen Verfahren haben den Nachteil, daß sie empfindlich sind gegenüber Verschmutzungen und größere Leistungen, z. B. für eine Lenkradheizung, nicht übertragen werden können.

Ein Verfahren mit den eingangs genannten Merkmalen ist aus der WO 94/01846 A bekannt. Dabei wird der als Übertrager dienende Transformator mit einer festen Rechteckfrequenz betrieben, die entsprechend der von der Primär- zur Sekundärseite zu übertragenden Energie moduliert wird. An den Schaltflanken wird zur Datenübertragung in beiden Richtungen eine hochfrequente Schwingung angehängt. Die Übertragung von der Primär- zur Sekundärseite erfolgt dabei z. B. bei den steigenden Flanken, in der anderen Richtung erfolgt dann die Übertragung bei den fallenden Flanken.

Bei diesem Verfahren wird jedoch die Datenübertragungsrate in beiden Übertragungsrichtungen durch die Schaltfrequenz der Anregung für den Übertrager begrenzt. Außerdem können an den Schaltflanken immer hochfreqente Störungen auftreten, die die Datenübertragung stören können.

Die EP 0 616 924 A1, die den nächstkommenden Stand der Technik bildet, offenbart eine Vorrichtung und ein Verfahren zur drahtlosen Übertragung von Daten und Energie zwischen zwei Teilen, mit einem transformatorischen Übertrager. Dieser besteht aus einer dem einen Teil zugeordneten Primärwicklung und einer dem anderen Teil zugeordneten Sekundärwicklung. Auf der Primärseite wird ein rechteckförmiges Trägersignal eingesetzt, das zur Energieübertragung und zur Datenübertragung (durch Spannungsunterbrechung des Trägersignals) amplitudenmoduliert wird. Die Datenübertragung in umgekehrter Richtung wird durch einen sekundärseitigen Belastungsimpuls während der sogenannten Energiespeicherphase vorgenommen, das heißt, während der positive Spannungsimpuls zur Energieübertragung an der Primärseite anliegt. Ein Vollduplexbetrieb läßt sich erreichen, indem die Spannungsunterbrechung auf der Primärseite und der Strombelastungsimpuls auf der Sekundärseite nicht zusammenfallen. Die Datenübertragung durch den sekundärseitigen Belastungsimpuls erfolgt jedoch offensichtlich synchron mit Schaltflanken der primärseitigen Spannungsimpulse zur Energieübertragung, durch die die Datenübertragung synchronisiert wird.

Der Erfindung liegt die Aufgabe zugrunde, ein Verfahren der eingangs genannten Art zu schaffen, das störsicher ist.

Die Erfindung löst diese Aufgabe durch die Merkmale des Patentanspruchs 1.

Die Übertragung der Leistung erfolgt durch Ansteuerung der Primärseite des Übertragers mit einem gleichspannungsfreien Wechselsignal. Das Wechselsignal selbst ist auch Träger der Information von der Primär- zur Sekundärseite. Die Codierung des in dieser Richtung übertragenen Signals kann durch eine Pulsweitenmodulation des Wechselsignals erfolgen. Sie kann aber auch vorzugsweise mit einem Biphase-Code-Modus vorgenommen werden. Auch dieser Code ist gleichspannungsfrei und somit als Ansteuersignal für den Übertrager geeignet. Die Datenrate in der angegebenen Richtung ist damit gleich der Ansteuerfrequenz des Übertragers.

Die Datenübertragung in der anderen Richtung, beim gewählten Beispiel von der Sekundär- zur Primärseite, kann durch Aufmodulieren eines hochfrequenten Signals (HF-Burst) mit einer Frequenz von beispielsweise zwei MHz an definierten Stellen des Primärsignals. Diese Stellen liegen außerhalb der Schaltflanken des Primärsignals. Im Bereich der Schaltflanken der Primärseite werden somit keine Daten übertragen. Damit ist sichergestellt, daß durch die Schaltflanken verursachte Störungen des Datenverkehrs nicht irrtümlich als Informationssignal interpretiert werden.

Erfolgt die Übertragung in der zuletzt genannten (anderen) Richtung mit einer Frequenz, die ein geradzahliges Verhältnis zur Übertragungsfrequenz in der erstgenannten Richtung besitzt, so läßt sich damit in der anderen Richtung auch die Übertragungsfrequenz erhöhen und eine größere Datenmenge in dieser Richtung übertragen. Ein derartiges Vorgehen bietet sich an im Falle des Beispiels Lenkrad/Lenksäule eines Fahrzeugs, in dem es sich bei der zweiten Richtung um die Übertragung von Informationen handelt, die im Lenkrad aufgegeben und zur Lenksäule übertragen werden sollen. Dadurch ist es möglich, beispielsweise im Lenkrad eine Vielzahl von Schaltern anzuordnen, deren Schaltzustand problemlos übertragen und in eine entsprechende Beschaltung der zugehörigen Geräte umgesetzt wird.

Anhand der Zeichnung ist die Erfindung weiter erläutert. Es zeigt
- Fig. 1: ein Diagramm zur Erläuterung des Datenverkehrs zwischen relativ zueinander beweglichen Teilen und
- Fig. 2: ein Blockschaltbild zur Realisierung des in Fig. 1 dargestellten Datenverkehrs.

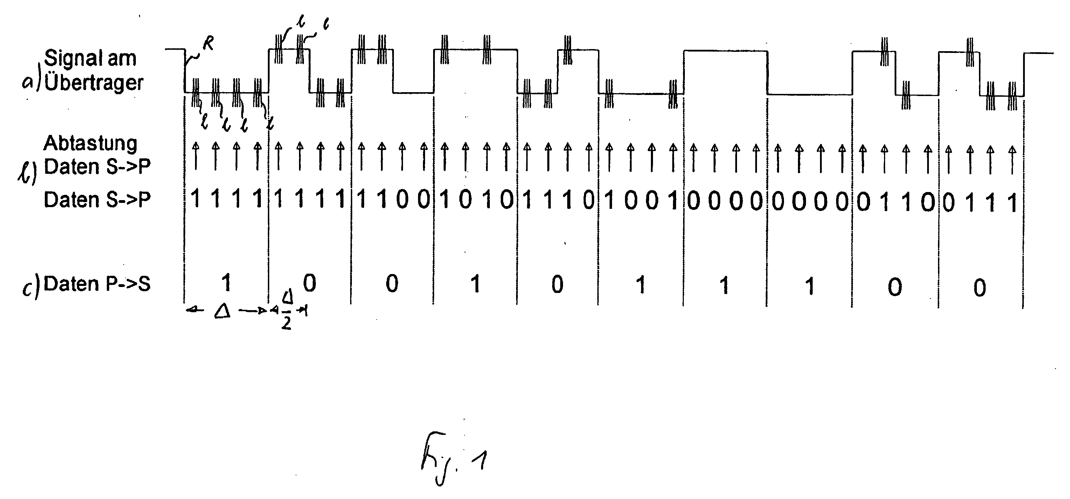

Die Daten- und Energieübertragung erfolgt über einen als Transformator dienenden Übertrager 1 (Fig. 2) von einer Primärseite (in Fig. 2 mit P bezeichnet) zu einer Sekundärseite (S in Fig. 2) werden Energie und Daten übertragen. In der Gegenrichtung, von S nach P werden lediglich Daten übertragen.

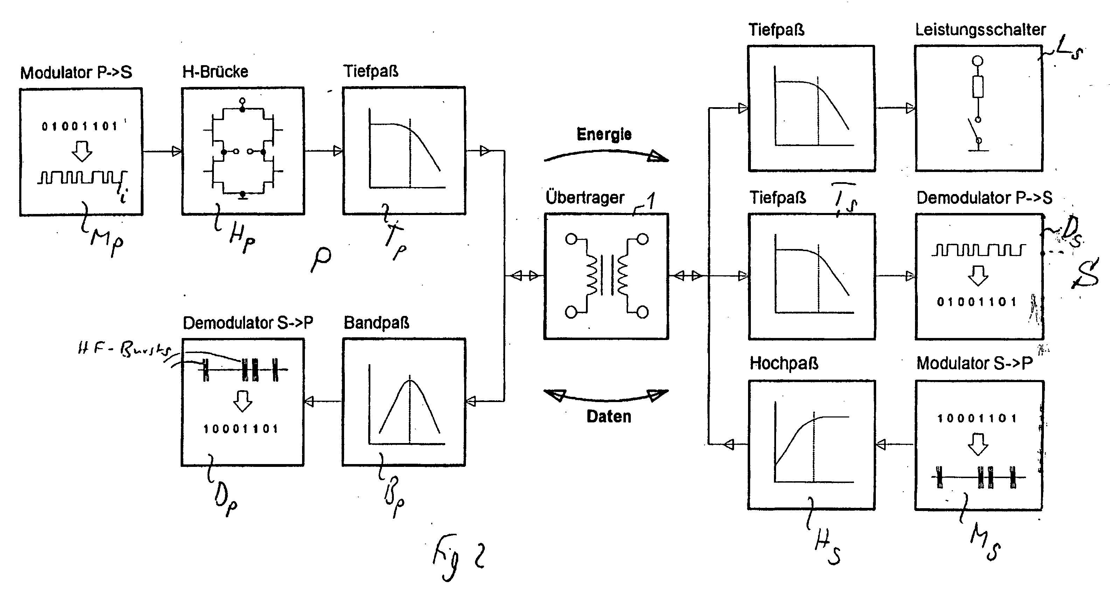

Durch das erfindungsgemäße Verfahren ergibt sich am Übertrager ein Signal, dessen Verlauf im Diagramm a von Fig. 1 dargestellt ist. Die Energieübertragung erfolgt mit Hilfe eines getakteten Rechtecksignals R, das im Biphase-Code-Modus moduliert ist. Durch diese Modulation werden Daten von P nach S übertragen. Diese Daten sind beispielhaft im Diagramm c von Fig. 1 angegeben und führen zu dem im Diagramm a gezeigten Verlauf. Das Datum "1" führt innerhalb der Periode Δ für die Übertragung eines Bits zu keiner Änderung des Signals R, während die Information "0" zu einer Änderung zum Zeitpunkt Δ/2 führt. Nach jeder Periode wechselt das Rechtecksignal sein Vorzeichen.

Dem in dieser Weise entsprechend dem Inhalt der von P nach S übertragenen Daten modulierten Biphase-Code-Signal R ist ein höherfrequentes Signal für die Datenübertragung in der entgegengesetzten Richtung, d. h. von S nach P überlagert. Die Frequenz für die Datenübertragung von S nach P ist ein geradzahliges Vielfaches der Frequenz für die Datenübertragung von P nach S. Die Daten werden von S nach P außerhalb der Schaltflanken des Signals R übertragen.

Im gezeigten Beispiel ist die Datenübertragungsrate von S nach P viermal so groß wie die Übertragungsrate von P nach S. Die Daten 1 werden durch Modulation des Rechtecksignals mit einer Hochfrequenz von beispielsweise 2 MHz, d. h. in Form von sogenannten HF-Bursts übertragen. Die dargestellten Bursts b entsprechen der Information 1. Die Information 0 ist dadurch ersichtlich, daß dann keine HF-Bursts auf den Übertrager ausgegeben werden. Die auf diese Weise von S nach P übertragenenen Daten sind beispielhaft im Diagramm b von Fig. 1 gezeigt. Dabei zeigen die nach oben gerichteten kleinen Pfeile auf die jeweiligen Stellen des am Übertrager 1 vorliegenden Signals, an denen sich die den von S nach P übertragenen Daten zugeordneten HF-Bursts befinden.

Das in Fig. 2 dargestellte Blockschaltbild zeigt primärseitig zur Übertragung der Daten von P nach S einen Modulator Mₚ, der eine entsprechend der von P nach S übertragenen Information modulierte Impulsfolge i erzeugt. Über eine nachgeschaltete H-Brücke H_{P} sowie einem Tiefpaß Tₚ wird das in Fig. 1, Diagramm a gezeigte Dual-Phase-Codesignal erzeugt und auf die Primärseite des Übertragers 1 gegeben.

Ebenfalls an der Primärseite des Übertragers angeschlossen ist ein Demodulator Dₚ über einen Bandpaß Bₚ angeschlossen. Damit wird die auf den Übertrager vorliegende, sekundärseitig aufgegebene Information (Diagramm b von Fig. 1) ausgewertet.

Sekundärseitig, d. h. an der Sekundärwicklung des Übertragers 1 angeschlossen, sind elektrische Verbraucher (nicht dargestellt), die durch einen symbolisch dargestellten Leistungsschalter Lₛ schaltbar sind. Es handelt sich dabei im Falle eines Lenkrads um eine Lenkradheizung oder eine im Lenkrad angeordnete Freisprecheinrichtung eines Telefons. Damit wird die über den Übertrager übertragene Energie sekundärseitig auf die Verbraucher aufgeteilt.

Über einen Tiefpaß Tₛ ist ein Demodulator D_{S} angeschlossen, über den die dem Ansteuersignal des Übertragers aufgegebene Information ausgewertet wird. Diese Information ist identisch mit der am Modulator M_{P} vorliegenden Information. Damit wird der Informationsaustausch zwischen Primär- und Sekundärseite erreicht.

Schließlich befindet sich ein Modulator M_{S} am Übertrager mit seiner Sekundärseite über einen Hochpaß H_{S}. Damit wird die sekundärseitig aufgegebene Information in Form der HF-Bursts auf das sekundärseitig vorliegende Signals des Übertragers 1 aufmoduliert. Dieses Signal ist identisch mit dem am Demodulator D_{P} empfangenen Signal. Dadurch wird die Datenübertragung von der Sekundär- zur Primärseite erzielt.

Nicht dargestellt ist die Synchronisation von Modulator M_{P} und M_{S}. Dadurch wird erreicht, daß die von der Sekundär- zur Primärseite übertragene Information außerhalb der Schaltflanken des primärseitigen Biphase-Code-Signals auf dieses Signal aufgegeben wird. Dadurch werden Störungen, die an den Schaltflanken des Codesignals auftreten, vermieden und ein ungestörter Datenverkehr zwischen Sekundär- und Primärseite erreicht.

## Patentansprüche

1. Verfahren zum drahtlosen Übertragen von Energie und Daten zwischen zwei Teilen, mit einem transformatorischen Übertrager, bestehend aus einer dem einen Teil zugeordneten Primärwicklung und einer dem anderen Teil zugeordneten Sekundärwicklung, und mit einem rechteckförmigen Trägersignal auf der Primärseite, wobei die Datenübertragung von der Primär- zur Sekundärseite durch Amplituden- und/oder Phasenmodulation des Trägersignals und die Datenübertragung von der Sekundär- zur Primärseite außerhalb der Schaltflanken des Trägersignals vorgenommen wird.

2. Verfahren nach Anspruch 1, **dadurch gekennzeichnet, daß** die Datenübertragung in der einen Richtung mit einer höheren Frequenz als die Datenübertragung in der anderen Richtung vorgenommen wird.

3. Verfahren nach Anspruch 2, **dadurch gekennzeichnet, daß** die Datenübertragungsfrequenzen für die beiden Richtungen in einem geradzahligen Verhältnis zueinander stehen.

4. Verfahren nach einem der Ansprüche 1 bis 3, **dadurch gekennzeichnet, daß** die Datenübertragung von der Primär- zur Sekundärseite im Biphase-Code-Modus erfolgt.

5. Verfahren nach einem der vorhergehenden Ansprüche, **dadurch gekennzeichnet, daß** die Datenübertragung von der Sekundär- zur Primärseite durch HF-Bursts vorgenommen wird.

## Claims

1. A method of wireless transmission of energy and data between two parts, comprising a transforming transmitter comprising a primary winding associated with the one part and a secondary winding associated with the other part and with a square-wave carrier signal on the primary side, wherein data is transmitted from the primary to the secondary side by amplitude and/or phase modulation of the carrier signal and data is transmitted from the secondary to the primary side outside the edges of the carrier signal.

2. A method according to claim 1, **characterised in that** data is transmitted in one direction at a higher frequency than in the other direction.

3. A method according to claim 2, **characterised in that** the data transmission frequencies in the two directions are in an even-number ratio to one another.

4. A method according to any of claims 1 to 3, **characterised in that** data transmission from the primary to the secondary side is effected in biphase code mode.

5. A method according to any of the preceding claims, **characterised in that** data transmission from the secondary to the primary side is effected via HF bursts.

## Revendications

1. Procédé de transmission sans fil d'énergie et de données entre deux parties, utilisant un transmetteur en forme de transformateur composé d'un enroulement primaire affecté à une partie et d'un enroulement secondaire affecté à l'autre partie, avec un signal porteur rectangulaire sur le côté primaire,
**caractérisé en ce que**
la transmission de données du côté primaire au côté secondaire a lieu par modulation d'amplitude et/ou modulation de phase du signal porteur, et la transmission de données du côté secondaire au côté primaire s'effectue en dehors des flancs de commutation du signal porteur.

2. Procédé selon la revendication 1,
**caractérisé en ce que**
la transmission de données a lieu dans un sens avec une fréquence plus élevée que la transmission de données dans l'autre sens.

3. Procédé selon la revendication 2,
**caractérisé en ce que**
les fréquences de transmission de données dans les deux sens présentent entre elles un rapport entier.

4. Procédé selon une des revendications 1 à 3,
**caractérisé en ce que**
la transmission de données du côté primaire au côté secondaire a lieu dans le mode codé biphasé.

5. Procédé selon une des revendications précédentes,
**caractérisé en ce que**
la transmission des données du côté secondaire au côté primaire a lieu par paquets HF.
